# EUROPÄISCHE PATENTSCHRIFT

(11) **EP 4 102 778 B1**
(45) Veröffentlichungstag und Bekanntmachung des Hinweises auf die Patenterteilung: **01.01.2025**
(21) Anmeldenummer: 22171511.3
(22) Anmeldetag: 04.05.2022
(51) Int. Cl.: H04L 12/40

(54) **SENDE-EMPFANGSEINRICHTUNG FÜR EINE TEILNEHMERSTATION EINES SERIELLEN BUSSYSTEMS UND VERFAHREN ZUR KOMMUNIKATION IN EINEM SERIELLEN BUSSYSTEM**
TRANSCEIVER DEVICE FOR A SUBSCRIBER STATION OF A SERIAL BUS SYSTEM AND METHOD FOR COMMUNICATING IN A SERIAL BUS SYSTEM
DISPOSITIF ÉMETTEUR-RÉCEPTEUR POUR UNE STATION D'ABONNÉS D'UN SYSTÈME DE BUS SÉRIE ET PROCÉDÉ DE COMMUNICATION DANS UN SYSTÈME DE BUS SÉRIE

(30) Priorität: 07.06.2021 DE 102021205719
(43) Veröffentlichungstag der Anmeldung: 14.12.2022
(73) Patentinhaber: Robert Bosch GmbH, 70442 Stuttgart (DE)
(72) Erfinder: Walker, Steffen, 72770 Reutlingen (DE); Lang, Felix, 72766 Reutlingen (DE)

(56) Entgegenhaltungen:
- WO-A1-2020/142200

## Beschreibung

### Technisches Gebiet

Die vorliegende Erfindung betrifft eine Sende-/Empfangseinrichtung für eine Teilnehmerstation eines seriellen Bussystems und ein Verfahren zur Kommunikation in einem seriellen Bussystem.

### Stand der Technik

Bussysteme werden für die Kommunikation zwischen Sensoren und Steuergeräten in technischen Anlagen für viele verschiedene Anwendungen eingesetzt. Insbesondere finden Bussysteme in Fahrzeugen Verwendung. Je nach Anwendung ist es gefordert oder essentiell, dass die Daten mit höchstmöglicher Datenübertragungsrate vom Sender zum Empfänger übertragen werden.

Bei Fahrzeugen ist derzeit ein Bussystem in der Einführungsphase, in welchem Daten als Nachrichten im Standard IS011898-1 :2015 als CAN Protokoll-Spezifikation mit CAN FD übertragen werden. Die Nachrichten werden zwischen den Busteilnehmern des Bussystems, wie Sensor, Steuergerät, Geber, usw., übertragen. Hierfür wird die Nachricht auf den Bus in einem Rahmen gesendet, in dem zwischen zwei Kommunikationsphasen umgeschaltet wird. In der ersten Kommunikationsphase (Arbitration) wird ausgehandelt, welche der Teilnehmerstationen des Bussystems in der nachfolgenden zweiten Kommunikationsphase (Datenphase bzw. Senden der Nutzdaten) ihren Rahmen auf den Bus senden darf. CAN FD wird von den meisten Herstellern im ersten Schritt mit 500kbit/s Arbitrationsbitrate und 2Mbit/s Datenbitrate im Fahrzeug eingesetzt. Es ist also bei der Übertragung auf dem Bus zwischen einer langsamen Betriebsart und einer schnellen Betriebsart hin und her zu schalten.

Um noch größere Datenraten in der zweiten Kommunikationsphase zu ermöglichen, gibt es Nachfolgebussysteme für CAN FD, wie beispielsweise CAN-SIC und CAN XL. Bei CAN-SIC gemäß dem Standard CiA601-4 kann eine Datenbitrate von ca. 5 bis 8 Mbitfs erreicht werden. Bei CAN XL kann die Datenrate in einem Bereich von 5 bis 20Mbit/s sein, wobei die Standards dafür derzeit bei der Organisation CAN in Automation (CiA) festgelegt werden (CiA610-3). CAN XL soll neben dem reinen Datentransport über den CAN-Bus auch andere Funktionen unterstützen, wie funktionale Sicherheit (Safety), Datensicherheit (Security) und Dienstgüte (QoS = Quality of Service). Dies sind elementare Eigenschaften, die in einem autonom fahrenden Fahrzeug benötigt werden.

WO 2020/142200 A1 zeigt ein Fahrzeugdatenprotokollierungssystem, welches Daten von drei verschiedenen CAN-Bussen eines Fahrzeugs sammeln oder protokollieren kann. Das System kann herausfinden, welche (unterschiedlichen) Datentransferraten und/oder Kommunikationsprotokolle die CAN-Busse verwenden. Hierfür hat das System drei Schnittstellen, welche die Konfiguration der drei CAN-Busse aufgrund von Daten herausfinden, welche während des Betriebs der drei CAN-Busse gesammelt werden. Die Daten umfassen Fehlernachrichten, die von dem System durch Senden von Testnachrichten erzeugt werden. Die Fehlernachrichten vermindern die Datenübertragungsrate im Bussystem.

Problematisch ist, wenn neue Teilnehmerstationen an das Bussystem angeschlossen sollen werden, die mit größerer Datenübertragungsrate als bisher arbeiten sollen. Eine derartige Änderung des Bussystems erfordert oft einen Austausch aller technischen Geräte für die Kommunikation im Bussystem. Dies ist teuer und in Bezug auf schonenden Umgang mit Ressourcen oft unerwünscht.

### Offenbarung der Erfindung

Daher ist es Aufgabe der vorliegenden Erfindung, eine Sende-/Empfangseinrichtung für eine Teilnehmerstation eines seriellen Bussystems und ein Verfahren zur Kommunikation in einem seriellen Bussystem bereitzustellen, welche die zuvor genannten Probleme lösen. Insbesondere sollen eine Sende-/Empfangseinrichtung für eine Teilnehmerstation eines seriellen Bussystems und ein Verfahren zur Kommunikation in einem seriellen Bussystem bereitgestellt werden, mit welchen eine unaufwändige Steigerung der maximalen Datenübertragungsrate im Bussystem bei großer Flexibilität und Fehlerrobustheit der Kommunikation realisierbar ist.

Die Aufgabe wird durch eine Sende-/Empfangseinrichtung für eine Teilnehmerstation eines seriellen Bussystems mit den Merkmalen von Anspruch 1 gelöst. Die Sende-/Empfangseinrichtung hat ein Sendemodul zum Senden eines Sendesignals auf einen Bus des Bussystems, bei welchem Bussystem zum Austausch von Nachrichten zwischen Teilnehmerstationen des Bussystems mindestens eine erste Kommunikationsphase und eine zweite Kommunikationsphase verwendet werden, ein Empfangsmodul zum Empfang des Signals von dem Bus, wobei das Empfangsmodul ausgestaltet ist, aus dem von dem Bus empfangenen Signal ein digitales Empfangssignal zu erzeugen, und ein Kommunikationsmodul zum Bestimmen des Kommunikationsstandards gemäß welchem die Nachrichten zwischen Teilnehmerstationen des Bussystems ausgetauscht werden, wobei das Kommunikationsmodul mindestens einen Baustein aufweist, mit welchem der Kommunikationsstandard für das Sendemodul und das Empfangsmodul von einem ersten Kommunikationsstandard zu einem zweiten Kommunikationsstandard änderbar ist, so dass das Sendemodul und das Empfangsmodul entweder gemäß einem ersten Kommunikationsstandard zum Senden und/oder Empfangen von Nachrichten oder gemäß einem zweiten Kommunikationsstandard zum Senden und/oder Empfangen von Nachrichten ausgestaltet sind, wie in Anspruch 1 beschrieben.

Die zuvor beschriebene Ausgestaltung der Sende-/Empfangseinrichtung ermöglicht, je nach Bedarf die Übertragungseigenschaften der Sende-/Empfangseinrichtung für ein Bussystem anzupassen. Dabei ist ein Wechsel zwischen verschiedenen Kommunikationsstandards ohne Austausch der Kommunikationsgeräte des Bussystems möglich. Dies ermöglicht einen besonders günstigen Umgang mit Ressourcen. Zudem ist dabei eine Integration der zuvor beschriebenen Sende-/Empfangseinrichtung in einer anwendungsspezifischen integrierten Schaltung (ASIC) möglich. Dies bringt ab einem gewissen Verwendungsgrad enorme betriebswirtschaftliche Vorteile mit sich, wie kleinere Schaltung, geringeren Platzbedarf, bessere Integration, und dadurch Kostenersparnis sowie einfachere Anwendung. Dabei kann auch ein und dieselbe ASIC für Jahre verwendet werden, ohne Abstriche an der Zukunftsfähigkeit für eine Erhöhung der Datenrate in einem Bussystem machen zu müssen. Somit können die Vorteile der Integration der Sende-/Empfangseinrichtung in die ASIC auch genutzt werden, wenn die Neukonzeption eines ASICs vom Entwicklungsstart bis zur Feldeinführung beispielsweise 3 bis 5 Jahre dauert und sich in dieser Zeit schon der Kommunikationsstandard für ein Bussystem geändert hat und/oder eine schnellere Kommunikation benötigt wird. Mit anderen Worten, die beschriebene Sende-/Empfangseinrichtung ist als sogenanntes "Kombi-Produkt" sehr vorteilhaft, wenn sich die Steuergerätehersteller derzeit oder in Zukunft bei der Auswahl des CAN-Transceivers für einen von mindestens zwei Standards, insbesondere für einen der Standards CAN-FD oder CAN-SIC oder CAN-XL, entscheiden müssen. Beispielsweise ist es für Steuergerätehersteller rentabel, eine ASIC mit integrierter eigenständiger Sende-/Empfangseinrichtung (Standalone-Transceiver) zu verwenden. Die beschriebene Sende-/Empfangseinrichtung erhält dabei für Steuergerätehersteller die Flexibilität bezüglich des Typs (CAN-FD oder CAN-SIC oder CAN-XL) des CAN-Transceiver-Moduls.

Darüber hinaus ermöglicht die zuvor beschriebene Ausgestaltung der Sende-/Empfangseinrichtung, dass die Bausteine widersprüchliche Anforderungen für Konfigurationsstandards auflösen können. Beispielsweise schließen nämlich die für die CAN-SIC-Funktionalität zusätzlich erforderlichen Schaltungsteile und deren parasitäre Kapazität die Einhaltung der Anforderung an die maximale Anschluss-Kapazität der Busleitungen aus, die für andere CAN-Varianten benötigt werden.

Die Sende-/Empfangseinrichtung kann dadurch in einem seriellen Bussystem, insbesondere bei CAN FD oder CAN SIC oder CAN XL, bei großer Flexibilität für die Reaktion auf wechselnde Anforderungen der Kommunikation sehr unaufwändig an die jeweiligen Anforderungen angepasst werden. Dadurch ist je nach Bedarf eine Kommunikation mit angepasster, insbesondere erhöhter, Datenübertragungsrate und dennoch geringer Fehlerrate möglich. Im Ergebnis kann somit eine sehr robuste Kommunikation mit geringem Platzbedarf und hoher Integrationsrate für die erforderliche Hardware realisiert werden. Insbesondere ist es möglich, Nachrichten bei Bedarf mit einem ersten Kommunikationsstandard oder Kommunikationsprotokoll zu senden, insbesondere CAN FD, und je nach Bedarf umzuschalten, um Nachrichten mit einem zweiten Kommunikationsstandard oder Kommunikationsprotokoll zu senden, insbesondere CAN-SIC oder CAN XL.

Noch dazu ermöglicht die beschriebene Anpassung der Übertragungseigenschaften der Sende-/Empfangseinrichtung, dass die Daten bei Bedarf mit einer höheren Datenübertragungsrate übertragen werden, ohne dadurch die Fehlerrobustheit der Kommunikation in dem Bussystem zu senken.

Die Sende-/Empfangseinrichtung kann auch bei erhöhter Datenübertragungsrate für Nutzdaten der Nachricht, in einer ersten Kommunikationsphase eine von CAN bekannte Arbitration beibehalten.

Die Sende-/Empfangseinrichtung kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Sende-/Empfangseinrichtung sind in den abhängigen Ansprüchen angegeben.

Bei einer Ausgestaltung ist das Sendemodul gemäß dem ersten Kommunikationsstandard ausgestaltet, eine Nachricht in allen Kommunikationsphasen mit demselben Physical Layer auf den Bus zu senden.

Bei einer Ausgestaltung ist der mindestens eine Baustein ausgestaltet, das Sendemodul gemäß dem zweiten Kommunikationsstandard derart auszugestalten, dass in einer Kommunikationsphase zum Übertragen von Nutzdaten der Nachricht die Bits mit einer Bitzeit auf den Bus getrieben werden, die kleiner als eine Bitzeit von Bits ist, die das Sendemodul gemäß dem ersten Kommunikationsstandard in der Kommunikationsphase zum Übertragen von Nutzdaten der Nachricht auf den Bus treibt.

Bei einer Ausgestaltung ist der mindestens eine Baustein ausgestaltet, das Sendemodul gemäß einem dritten Kommunikationsstandard derart zu ändern, dass zumindest in einer ersten Kommunikationsphase der Nachricht ein anderer Physical Layer für das auf den Bus zu sendende Signal verwendet wird als in einer zweiten Kommunikationsphase.

Das Kommunikationsmodul hat zudem mindestens einen Anschluss zum Empfang eines Signals zum Aktivieren oder Deaktivieren des mindestens einen Bausteins.

Möglicherweise ist das Kommunikationsmodul ausgestaltet, den Kommunikationsstandard für das Sendemodul und das Empfangsmodul durch Programmieren des mindestens einen Bausteins im Betrieb zu ändern, wie in den Ansprüchen beschrieben.

Denkbar ist, dass das Kommunikationsmodul ausgestaltet ist, den Kommunikationsstandard für das Sendemodul und das Empfangsmodul durch Programmieren des mindestens einen Bausteins in der Serienprüftechnik zu ändern, wie in den Ansprüchen beschrieben.

Möglicherweise ist das Kommunikationsmodul derart ausgestaltet, dass der Kommunikationsstandard für das Sendemodul und das Empfangsmodul durch Maskenänderung bei der Einbindung des mindestens einen Bausteins in eine anwendungsspezifische integrierte Schaltung änderbar ist, wie in den Ansprüchen beschrieben.

Optional wird bei jedem der Kommunikationsstandards in der ersten Kommunikationsphase ausgehandelt, welche der Teilnehmerstationen des Bussystems in der nachfolgenden zweiten Kommunikationsphase einen zumindest zeitweise exklusiven, kollisionsfreien Zugriff auf den Bus bekommt.

In einer speziellen Ausgestaltung ist der erste Kommunikationsstandard CAN FD ist, wobei der zweite Kommunikationsstandard CAN SIC ist, und wobei der dritte Kommunikationsstandard CAN XL ist.

Die zuvor beschriebene Sende-/Empfangseinrichtung kann in eine anwendungsspezifische integrierte Schaltung integriert sein, die für die Ausführung einer Anwendung einer technischen Anlage ausgestaltet ist. Insbesondere ist die technische Anlage ein Fahrzeug und die Anwendung eine Steuerung für spezielle Funktionen zum Betrieb des Fahrzeugs.

Die zuvor beschriebene Sende-/Empfangseinrichtung kann Teil einer Teilnehmerstation für ein serielles Bussystem sein, wobei die Teilnehmerstation zudem eine Kommunikationssteuereinrichtung aufweist zum Steuern einer Kommunikation der Teilnehmerstation mit mindestens einer anderen Teilnehmerstation des Bussystems und zur Erzeugung des Sendesignals zum Senden auf den Bus des Bussystems und/oder zum Empfangen eines Signals von dem Bus, wobei die Sende-/Empfangseinrichtung zum Umwandeln des Sendesignals in mindestens ein analoges Signal zum Senden auf den Bus und zum Empfangen des mindestens einen analogen Signals von dem Bus ausgestaltet ist.

Die zuvor beschriebene Teilnehmerstation kann Teil eines Bussystems sein, das zudem einen Bus und mindestens zwei Teilnehmerstationen umfasst, welche über den Bus derart miteinander verbunden sind, dass sie seriell miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Kommunikation in einem seriellen Bussystem nach Anspruch 14 gelöst. Das Verfahren wird mit einer zuvor beschriebenen Sende-/Empfangseinrichtung für eine Teilnehmerstation eines Bussystems ausgeführt, wobei das Verfahren die Schritte aufweist, Senden, mit einem Sendemodul, eines Sendesignals auf einen Bus des Bussystems, bei welchem Bussystem zum Austausch von Nachrichten zwischen Teilnehmerstationen des Bussystems mindestens eine erste Kommunikationsphase und eine zweite Kommunikationsphase verwendet werden, Empfangen, mit einem Empfangsmodul, des Signals von dem Bus, wobei das Empfangsmodul ausgestaltet ist, aus dem von dem Bus empfangenen Signal ein digitales Empfangssignal zu erzeugen, und Bestimmen, mit einem Kommunikationsmodul, des Kommunikationsstandards gemäß welchem die Nachrichten zwischen Teilnehmerstationen des Bussystems ausgetauscht werden, wie in Anspruch 14 beschrieben.

Das Verfahren bietet dieselben Vorteile, wie sie zuvor in Bezug auf den Sende-/Empfangseinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer Teilnehmerstation des Bussystems gemäß dem ersten Ausführungsbeispiel gesendet werden kann;
Fig. 3 ein vereinfachtes schematisches Blockschaltbild einer Teilnehmerstation des Bussystems gemäß dem ersten Ausführungsbeispiel;
Fig. 4 einen zeitlichen Verlauf von Bussignalen CAN-XL_H und CAN-XL_L bei der Teilnehmerstation gemäß dem ersten Ausführungsbeispiel;
Fig. 5 einen zeitlichen Verlauf einer Differenzspannung VDIFF der Bussignale CAN-XL_H und CAN-XL_L bei der Teilnehmerstation gemäß dem ersten Ausführungsbeispiel; und Fig. 6 ein vereinfachtes Schaltbild einer Sende-/Empfangseinrichtung für ein Bussystem gemäß dem ersten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

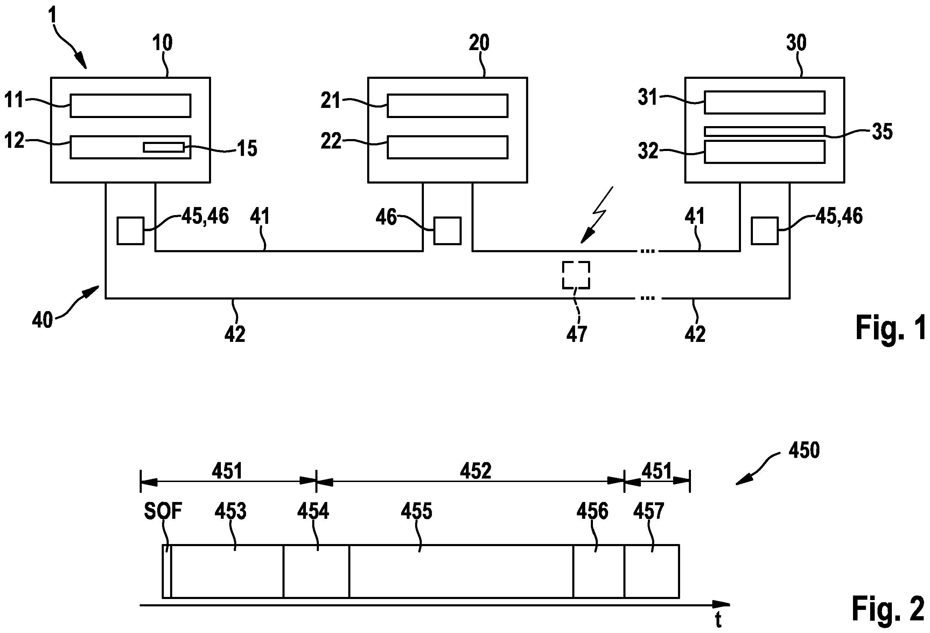

Fig. 1 zeigt als Beispiel ein Bussystem 1, das insbesondere grundlegend für ein CAN-Bussystem, ein CAN FD-Bussystem, ein CAN XL-Bussystem, und/oder Abwandlungen davon ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L oder CAN-FD_H und CAN-FD_L oder CAN-XL_H und CAN-XL_L genannt werden und dienen zur elektrischen Signalübertragung nach Einkopplung der dominanten Pegel bzw. Erzeugung von rezessiven Pegeln oder anderen Pegeln für ein Signal im Sendezustand.

Gemäß Fig. 1 sind über den Bus 40 möglicherweise Nachrichten 45, 46, in der Form von Signalen, zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, kann optional ein Fehlerrahmen 47 (Error Flag) gesendet werden. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und ein Kommunikationsmodul 15. Die Teilnehmerstation 20 hat eine Kommunikationssteuereinrichtung 21, eine Sende-/Empfangseinrichtung 22 und ein Kommunikationsmodul 25. Die Teilnehmerstation 30 hat eine Kommunikationssteuereinrichtung 31 und eine Sende-/Empfangseinrichtung 32. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

Die Kommunikationssteuereinrichtungen 11, 31 erstellen und lesen erste Nachrichten 45, die beispielsweise modifizierte CAN Nachrichten 45 sind. Hierbei sind die modifizierten CAN Nachrichten 45 beispielsweise auf der Grundlage des CAN SIC-Formats oder des CAN XL-Formats aufgebaut. Das CAN XL-Format ist in Bezug auf Fig. 2 detaillierter beschrieben. Die Kommunikationssteuereinrichtungen 11, 31 können zudem ausgeführt sein, um je nach Bedarf eine modifizierte CAN Nachricht 45 oder eine CAN FD-Nachricht 46 für die Sende-/Empfangseinrichtung 12, 32 bereitzustellen oder von dieser zu empfangen. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN XL oder CAN SIC oder CAN FD.

Die Kommunikationssteuereinrichtung 21 kann wie ein herkömmlicher CAN-Controller nach ISO 11898-1:2015 ausgeführt sein, d.h. wie ein CAN FD toleranter Classical CAN-Controller oder ein CAN FD Controller. Die Kommunikationssteuereinrichtung 21 erstellt und liest zweite Nachrichten 46, beispielsweise CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachricht übertragen werden. insbesondere ist die Kommunikationssteuereinrichtung 21 wie ein herkömmlicher CAN FD-Controller ausgeführt.

Die Sende-/Empfangseinrichtung 22 kann wie ein herkömmlicher CAN Transceiver nach ISO 11898-1:2015 oder CAN FD Transceiver ausgeführt sein.

Die Sende-/Empfangseinrichtungen 12, 32 können ausgeführt sein, um je nach Bedarf Nachrichten 45 gemäß dem CAN XL-Format oder Nachrichten 46 gemäß dem derzeitigen CAN FD-Format oder CAN SIC-Format für die zugehörige Kommunikationssteuereinrichtung 11, 31 bereitzustellen oder von dieser zu empfangen.

Mit den beiden Teilnehmerstationen 10, 30 ist eine Bildung und dann Übertragung von Nachrichten 45 mit verschiedenen CAN-Formaten, insbesondere dem CAN FD Format oder dem CAN SIC Format oder dem CAN XL Format sowie der Empfang solcher Nachrichten 45 realisierbar, wie nachfolgend genauer beschrieben.

Fig. 2 zeigt für die Nachricht 45 einen Rahmen 450, der insbesondere ein CAN XL Rahmen ist, wie er von der Kommunikationssteuereinrichtung 11 für die Sende-/Empfangseinrichtung 12 zum Senden auf den Bus 40 bereitgestellt wird. Hierbei erstellt die Kommunikationssteuereinrichtung 11 den Rahmen 450 bei dem vorliegenden Ausführungsbeispiel als kompatibel mit CAN FD. Dasselbe gilt analog für die Kommunikationssteuereinrichtung 31 und die Sende-/Empfangseinrichtung 32 der Teilnehmerstation 30. Alternativ ist der Rahmen 450 ein CAN SIC Rahmen.

Gemäß Fig. 2 ist der Rahmen 450 für die CAN-Kommunikation auf dem Bus 40 in unterschiedliche Kommunikationsphasen 451, 452 unterteilt, nämlich eine Arbitrationsphase 451 (erste Kommunikationsphase) und eine Datenphase 452 (zweite Kommunikationsphase). Der Rahmen 450 hat, nach einem Startbit SOF, ein Arbitrationsfeld 453, ein Steuerfeld 454, ein Datenfeld 455, ein Prüfsummenfeld 456 und ein Rahmenabschlussfeld 457.

In der Arbitrationsphase 451 wird mit Hilfe eines Identifizierers (ID) mit beispielsweise Bits ID28 bis ID18 in dem Arbitrationsfeld 453 bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt. In der Arbitrationsphase 451 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Ein wichtiger Punkt während der Phase 451 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Pegeln oder dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

In der Datenphase 452 werden neben einem Teil des Steuerfelds 454 die Nutzdaten des CAN-XL-Rahmens bzw. der Nachricht 45 aus dem Datenfeld 455 sowie das Prüfsummenfeld 456 gesendet. In dem Prüfsummenfeld 456 kann eine Prüfsumme über die Daten der Datenphase 452 einschließlich der Stuffbits enthalten sein, die vom Sender der Nachricht 45 nach jeweils einer vorbestimmten Anzahl von gleichen Bits, insbesondere 10 gleichen Bits, als inverses Bit eingefügt werden. Am Ende der Datenphase 452 wird wieder in die Arbitrationsphase 451 zurückgeschaltet.

In einem Endefeld in der Rahmenabschlussphase 457 kann mindestens ein Acknowledge-Bit enthalten sein. Außerdem kann eine Folge von 11 gleichen Bits vorhanden sein, welche das Ende des CAN XL-Rahmens 450 anzeigen. Mit dem mindestens einen Acknowledge-Bit kann mitgeteilt werden, ob ein Empfänger in dem empfangenen CAN XL-Rahmen 450 bzw. der Nachricht 45 einen Fehler entdeckt hat oder nicht.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

In einem Bussystem mit CAN XL oder CAN SIC werden bewährte Eigenschaften übernommen, die für die Robustheit und Anwenderfreundlichkeit von CAN und CAN FD verantwortlich sind, insbesondere Rahmenstruktur mit Identifier und Arbitrierung nach dem CSMA/CR-Verfahren. Somit verwendet die Teilnehmerstation 10 in der Arbitrationsphase 451 als erster Kommunikationsphase teilweise, insbesondere bis zum FDF-Bit (inklusive), ein von CAN/CAN-FD bekanntes Format gemäß der ISO11898-1:2015. Jedoch ist im Vergleich zu CAN oder CAN FD in der Datenphase 452 als zweiter Kommunikationsphase eine Steigerung der Netto-Datenübertragungsrate, insbesondere auf etwa 10 Megabit pro Sekunde möglich. Außerdem ist ein Anheben der Größe der Nutzdaten pro Rahmen, insbesondere auf etwa 2kbyte oder einen beliebigen anderen Wert möglich.

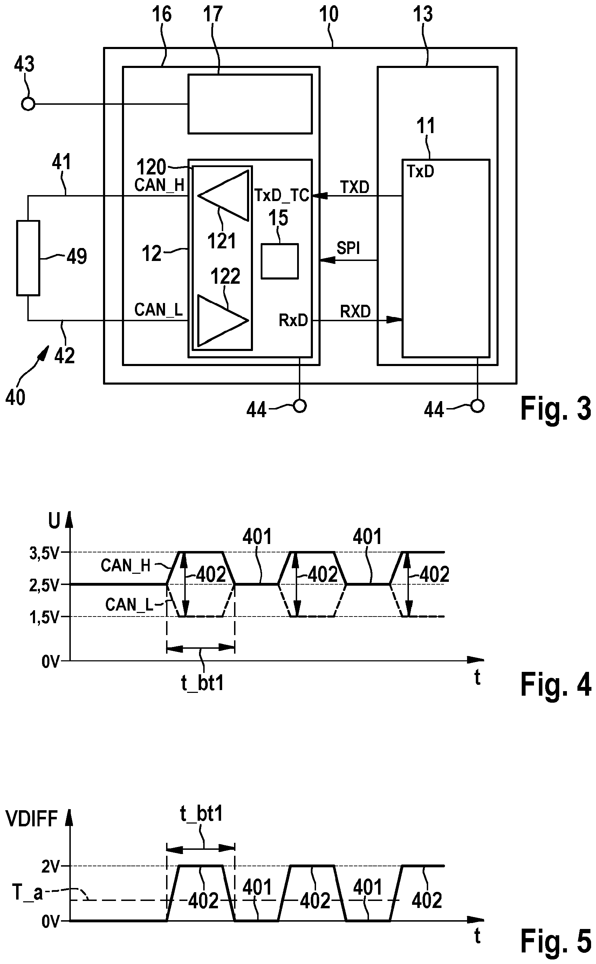

Fig. 3 zeigt den grundlegenden Aufbau der Teilnehmerstation 10 mit der Kommunikationssteuereinrichtung 11 und der Sende-/Empfangseinrichtung 12. Die Teilnehmerstationen 20, 30 sind vom Grundaufbau her, bis auf die zuvor genannten Unterschiede, auf dieselbe Weise aufgebaut, wie in Fig. 3 gezeigt. Daher werden die Teilnehmerstationen 20, 30 nicht separat beschrieben.

Gemäß Fig. 3 hat die Teilnehmerstation 10 zusätzlich zu der Kommunikationssteuereinrichtung 11 und der Sende-/Empfangseinrichtung 12 einen Mikrocontroller 13, welchem die Kommunikationssteuereinrichtung 11 zugeordnet ist, und eine System-ASIC 16 (ASIC = Anwendungsspezifische integrierte Schaltung), die alternativ ein System Basis-Chip (SBC) oder ein Standalone-Transceiver sein kann, auf dem mehrere für eine Elektronik-Baugruppe der Teilnehmerstation 10 notwendige Funktionen zusammengefasst sind. Beispielsweise ist oder hat die System-ASIC 16 eine Schaltung für sicherheitsrelevante Funktionen einer technischen Anlage, insbesondere eines Fahrzeugs. Derartige sicherheitsrelevante Funktionen eines Fahrzeugs sind insbesondere eine Kollisionserkennung, ein Bremsspurassistent, eine Lichtregelung, eine Rückfahrkamerasteuerung, eine Flüssigkeitsstandanzeige, von insbesondere Hydrauliköl für eine Bremsanlage, Wischwasser für eine Scheibenwaschanlage, eine Motorenöldruckerkennung, usw. Beispielsweise ist oder hat die System-ASIC 16 eine Schaltung für komfortrelevante Funktionen einer technischen Anlage, insbesondere eines Fahrzeugs. Derartige komfortrelevante Funktionen eines Fahrzeugs sind insbesondere eine Navigationssteuerung, ein Parkassistenzsystem, eine automatisch gesteuerte Scheibenwischanlage, usw. Die System-ASIC 16 hat ganz allgemein eine Schaltung oder Schaltungsteile für eine Anwendung des Fahrzeugs, insbesondere für eine Steuerung für spezielle Funktionen zum Betrieb des Fahrzeugs.

In dem System-ASIC 16 ist zusätzlich zu der Sende-/Empfangseinrichtung 12 eine Energieversorgungseinrichtung 17 eingebaut, welche die Sende-/Empfangseinrichtung 12 mit elektrischer Energie versorgt. Die Energieversorgungseinrichtung 17 liefert üblicherweise eine Spannung CAN_Supply von 5 V. Je nach Bedarf kann die Energieversorgungseinrichtung 17 jedoch eine andere Spannung mit einem anderen Wert liefern. Zusätzlich oder alternativ kann die Energieversorgungseinrichtung 17 als Stromquelle ausgestaltet sein.

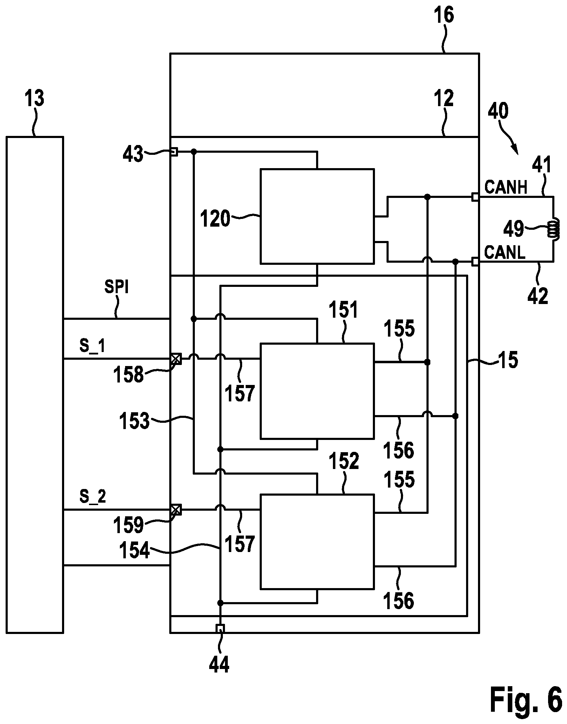

Die Sende-/Empfangseinrichtung 12 hat einen Sende-/Empfangsbaustein 120 mit einem Sendemodul 121 und einem Empfangsmodul 122. Zudem hat die Sende-/Empfangseinrichtung 12 das Kommunikationsmodul 15, das unter Verwendung eines Anschlusses SPI zwischen Mikrocontroller 13 und ASIC 16 in Bezug auf Fig. 6 noch genauer beschrieben ist.

Auch wenn nachfolgend immer von der Sende-/Empfangseinrichtung 12 gesprochen ist, ist es alternativ möglich, das Empfangsmodul 122 in einer separaten Einrichtung extern von dem Sendemodul 121 vorzusehen. Das Sendemodul 121 und das Empfangsmodul 122 können wie bei einer herkömmlichen Sende-/Empfangseinrichtung 22 aufgebaut sein. Das Sendemodul 121 kann insbesondere mindestens einen Operationsverstärker und/oder einen Transistor aufweisen. Das Empfangsmodul 122 kann insbesondere mindestens einen Operationsverstärker und/oder einen Transistor aufweisen.

Die Sende-/Empfangseinrichtung 12 ist an den Bus 40 angeschlossen, genauer gesagt dessen erste Busader 41 für CAN_H oder CAN-XL_H und dessen zweite Busader 42 für CAN_L oder CAN-XL_L. Über mindestens einen Anschluss 43 erfolgt die Spannungsversorgung für die Energieversorgungseinrichtung 17 zum Versorgen der ersten und zweiten Busader 41, 42 mit elektrischer Energie, insbesondere mit der Spannung CAN-Supply. Die Verbindung mit Masse bzw. CAN_GND ist über einen Anschluss 44 realisiert. Die erste und zweite Busader 41, 42 sind mit einem Abschlusswiderstand 49 terminiert.

Die erste und zweite Busader 41, 42 sind in der Sende-/Empfangseinrichtung 12 nicht nur mit dem Sendemodul 121, das auch als Transmitter bezeichnet wird, sondern auch mit dem Empfangsmodul 122 verbunden, das auch als Receiver bezeichnet wird, auch wenn die Verbindung in Fig. 3 zur Vereinfachung nicht gezeigt ist.

Im Betrieb des Bussystems 1 kann das Sendemodul 121 ein Sendesignal TXD oder TxD der Kommunikationssteuereinrichtung 11 in entsprechende Signale für die Busadern 41, 42 umsetzen, insbesondere die Signale CAN-FD_H und CAN-FD_L, und diese Signale an den Anschlüssen für CAN_H und CAN_L auf den Bus 40 senden, wie in Fig. 4 gezeigt.

Das Empfangsmodul 122 bildet aus von dem Bus 40 empfangenen Signalen, insbesondere den Signalen CAN-FD_H und CAN-FD_L, gemäß Fig. 4 ein Empfangssignal RXD oder RxD und gibt dieses an die Kommunikationssteuereinrichtung 11 weiter, wie in Fig. 3 gezeigt. Mit Ausnahme eines Leerlauf- oder Bereitschaftszustands (Idle oder Standby), hört die Sende-/Empfangseinrichtung 12 mit dem Empfangsmodul 122 im Normalbetrieb immer auf eine Übertragung von Daten bzw. Nachrichten 45, 46 auf dem Bus 40 und zwar unabhängig davon, ob die Sende-/Empfangseinrichtung 12 Sender der Nachricht 45, 46 ist oder nicht.

Gemäß dem Beispiel von Fig. 4 haben die Signale CAN-FD_H und CAN-FD_L für CAN FD oder CAN SIC und auch Signale CAN-XL_H, CAN-XL_L zumindest in der Arbitrationsphase 451 die dominanten und rezessiven Buspegel 401, 402, wie von CAN bekannt. Auf dem Bus 40 bildet sich ein Differenzsignal VDIFF = CAN-FD_H - CAN-FD_L oder VDIFF = CAN-XL_H - CAN-XL_L aus, das in Fig. 5 für die Arbitrationsphase 451 gezeigt ist. Die einzelnen Bits des Signals VDIFF mit der Bitzeit t_bt1 können in der Arbitrationsphase 451 mit einer Empfangsschwelle T_a von beispielsweise 0,7 V erkannt werden. In der Datenphase 452 werden die Bits bei CAN FD, CAN SIC, CAN XL schneller, also mit einer kürzeren Bitzeit t_bt2, gesendet als in der Arbitrationsphase 451. Somit unterscheiden sich die Signale CAN-FD_H und CAN-FD_L sowie CAN-XL_H und CAN-XL_L in der Datenphase 452 zumindest in deren schnelleren Bitrate von den herkömmlichen Signalen CAN_H und CAN_L.

Die Abfolge der Zustände 401, 402 für die Signale von Fig. 4 und der daraus resultierende Verlauf der Spannung VDIFF von Fig. 5 dient nur der Veranschaulichung der Funktion der Teilnehmerstation 10. Die Abfolge der Datenzustände für die Buszustände 401, 402 ist je nach Bedarf wählbar.

Mit anderen Worten erzeugt das Sendemodul 121, wenn es in eine erste Betriebsart B_451 (SLOW) geschaltet ist, gemäß Fig. 4 einen ersten Datenzustand als Buszustand 402 mit unterschiedlichen Buspegeln für zwei Busadern 41, 42 der Busleitung und einen zweiten Datenzustand als Buszustand 401 mit demselben Buspegel für die zwei Busadern 41, 42 der Busleitung des Busses 40.

Außerdem sendet das Sendemodul 121, für die zeitlichen Verläufe der Signale CAN-XL_H, CAN-XL_L in einer zweiten Betriebsart B_452_TX (FAST_TX), welche die Datenphase 452 umfasst, die Bits mit einer höheren Bitrate auf den Bus 40. Die CAN-XL_H und CAN-XL_L Signale können in der Datenphase 452 zudem mit einem anderen Physical Layer als bei CAN FD erzeugt werden. Dadurch kann die Bitrate in der Datenphase 452 noch weiter erhöht werden als bei CAN FD. Eine Teilnehmerstation, die in der Datenphase 452 kein Sender des Rahmens 450 ist, stellt in ihrer Sende-/Empfangseinrichtung eine dritte Betriebsart B_452_RX (FAST_RX) ein.

Fig. 6 zeigt die Sende-/Empfangseinrichtung 12 in Bezug auf das Kommunikationsmodul 15 von Fig. 3 genauer. Das Kommunikationsmodul 15 ist zwischen das Sende-/Empfangsmodul 120 und den Anschluss 44 für Masse geschaltet. Das Kommunikationsmodul 15 und das Sende-/Empfangsmodul 120 werden über den Anschluss 43 mit elektrischer Spannung versorgt.

Das Sende-/Empfangsmodul 120 ist zur Kommunikation gemäß einem ersten Kommunikationsstandard ausgestaltet. insbesondere ist der Kommunikationsstandard CAN FD. Somit kann das Sende-/Empfangsmodul 120 standardmäßig Nachrichten 46 über den Bus 40 senden.

Das Kommunikationsmodul 15 hat einen ersten Baustein 151, einen zweiten Baustein 152, eine erste Anschlussleitung 153 zum Anschluss an die elektrische Spannungsversorgung 43, eine zweite Anschlussleitung 154 zum Anschluss an Masse, erste Bus-Anschlussleitungen 155, zweite Busanschlussleitungen 156, Steuerleitungen 157, einen ersten Steueranschluss 158, und einen zweiten Steueranschluss 159.

Der erste Baustein 151 ist an seinem Eingang mit der ersten Anschlussleitung 153 verbunden und wird so von dem Anschluss 43 mit elektrischer Spannung versorgt. Zudem ist der erste Baustein 151 mit der zweiten Anschlussleitung 154 und dadurch mit Masse verbunden. Noch dazu ist der erste Baustein 151 über eine der Steuerleitungen 157 mit dem ersten Steueranschluss 158 verbunden. Der erste Baustein 151 enthält Komponenten, welche in Kombination mit den Komponenten des Sende-/Empfangsmoduls 120 die Sende-/Empfangseinrichtung 12 zur Kommunikation gemäß einem zweiten Kommunikationsstandard ausgestalten. Zudem ist der Baustein 151 an seinem Ausgang mit den Busanschlussleitungen 155, 156 verbunden. Somit wird ein Signal für die Busadern 41, 42 von den Ausgängen des ersten Bausteins 151 über die Busanschlussleitungen 155, 156 auf den Bus 40 getrieben. Der erste Baustein 151 kann insbesondere ein CAN-SIC-Baustein sein. In diesem Fall enthält der erste Baustein 151 Komponenten, welche bewirken, dass die Sende-/Empfangseinrichtung 12 zur Kommunikation gemäß dem CAN-SIC-Kommunikationsstandard ausgestaltet ist.

Der zweite Baustein 152 ist an seinem Eingang mit der ersten Anschlussleitung 153 verbunden und wird so von dem Anschluss 43 mit elektrischer Spannung versorgt. Zudem ist der zweite Baustein 152 mit der zweiten Anschlussleitung 154 und dadurch mit Masse verbunden. Noch dazu ist der zweite Baustein 152 über eine der Steuerleitungen 157 mit dem zweiten Steueranschluss 158 verbunden. Der zweite Baustein 152 enthält Komponenten, welche in Kombination mit den Komponenten des Sende-/Empfangsmodul 120 die Sende-/Empfangseinrichtung 12 zur Kommunikation gemäß einem dritten Kommunikationsstandard ausgestalten. Zudem ist der Baustein 152 an seinem Ausgang mit den Busanschlussleitungen 155, 156 verbunden. Somit wird ein Signal für die Busadern 41, 42 von den Ausgängen des zweiten Bausteins 152 über die Busanschlussleitungen 155, 156 auf den Bus 40 getrieben. Der zweite Baustein 152 kann insbesondere ein CAN-XL-Baustein sein. In diesem Fall enthält der zweite Baustein 152 Komponenten, welche bewirken, dass die Sende-/Empfangseinrichtung 12 zur Kommunikation gemäß dem CAN-XL-Kommunikationsstandard ausgestaltet ist.

Der erste und zweite Steueranschluss 158, 159 sind für eine Konfiguration der Sende-/Empfangseinrichtung 12 vorgesehen und verschaltet. Um die Sende-/Empfangseinrichtung 12 für die Ausführung der Funktionen des ersten Bausteins 151 zu konfigurieren, wird ein Signal S_1 in den ersten Steueranschluss 158 eingegeben. Das Schaltsignal S_1 bestimmt, ob die Funktionen des ersten Bausteins 151 aktiviert oder deaktiviert werden sollen. Um die Sende-/Empfangseinrichtung 12 für die Ausführung der Funktionen des zweiten Bausteins 152 zu konfigurieren, wird ein Signal S_2 in den zweiten Steueranschluss 159 eingegeben. Das Schaltsignal S_2 bestimmt, ob die Funktionen des ersten Bausteins 152 aktiviert oder deaktiviert werden sollen. Das Signal S_1 kann über den SPI -Anschluss an die Einrichtung 12 gesendet werden. Das Signal S_2 kann über den SPI -Anschluss an die Einrichtung 12 gesendet werden.

Für die Konfiguration der Sende-/Empfangseinrichtung 12 gibt es folgende Möglichkeiten.

Gemäß einer ersten Möglichkeit kann die Konfiguration im Betrieb der Sende-/Empfangseinrichtung 12 erfolgen. Beispielsweise wird hierbei das Signal S_1 oder S_2 bei der System-Initialisierung durch den Mikrocontroller 13 über den Anschluss SPI an den ASIC 16 ausgegeben. Das Signal S_1 oder das Signal S_2 kann bestimmen, ob die Sende-/Empfangseinrichtung 12 den ersten Kommunikationsstandard oder den zweiten Kommunikationsstandard oder den dritten Kommunikationsstandard ausführen soll. Soll die Sende-/Empfangseinrichtung 12 gemäß dem ersten Kommunikationsstandard arbeiten, gilt beispielsweise S_1 = 0 und S_2 = 0. Soll die Sende-/Empfangseinrichtung 12 gemäß dem zweiten Kommunikationsstandard arbeiten, gilt beispielsweise S_1 = 1 und S_2 = 0. Soll die Sende-/Empfangseinrichtung 12 gemäß dem dritten Kommunikationsstandard arbeiten, gilt beispielsweise S_1 = 0 und S_2 = 1. Somit kann der Benutzer, insbesondere der ECU-Applikateur, der Sende-/Empfangseinrichtung 12 per Software des Mikrocontrollers 13 oder auf der ASIC 16 entscheiden, in welcher Kommunikationsvariante, insbesondere CAN-Variante, die Sende-/Empfangseinrichtung 12 arbeitet.

Gemäß einer zweiten Möglichkeit kann die Konfiguration der Sende-/Empfangseinrichtung 12 per Programmierung des zu nutzenden Bausteins 151, 152 in der Serienprüftechnik erfolgen. Hierfür kann ähnlich vorgegangen werden, wie in Bezug auf die erste Möglichkeit beschrieben. Auf diese Weise kann das Sende-/Empfangsmodul 120 beispielsweise initial mit der CAN-FD-Funktionalität ausgestattet sein. Das Modul 120 wird dann später per Programmierung mit einem der Bausteine 151, 152 in der Serienprüftechnik verbunden, um in eine andere Kommunikationsvariante, insbesondere eine fortschrittlichere CAN-Variante überführt zu werden, beispielsweise in CAN SIC oder CANXL, wie zuvor beschrieben. Diese Programmierung des zu nutzenden Bausteins 151, 152 mit den Signalen S_1 und/oder S_2 kann über eine beliebige IC-Schnittstelle vorgenommen werden. Insbesondere kann für die Programmierung der Anschluss SPI oder mindestens ein anderer Anschluss (Pin) verwendet werden, der in einer Testbetriebsart (Testmode) für die Programmierung verwendbar ist. Alternativ ist es denkbar, separate zusätzliche Anschlüsse S1, S2 vorzuhalten, um das (die) Signal(e) S_1 und/oder S_2 einzugeben. Eine derartige Variante ist wegen der zusätzlichen Anschlüsse (Pins) jedoch sehr aufwändig und kostenintensiver als die zuvor genannten Varianten.

Gemäß einer dritten Möglichkeit kann die Konfiguration der Sende-/Empfangseinrichtung 12 per Maskenänderung bei der ASIC-Produktion erfolgen. Bei einer derartigen Konfiguration werden die nicht benötigten Schaltungsteile der Bausteine 151, 152 und/oder deren Leitungen 155, 156 per Maskenänderung physikalisch von den Busleitungen 41, 42 der Sende-/Empfangseinrichtung 12 entfernt. Sehr vorteilhaft daran ist, dass dadurch Parasiten wie Kapazität(en) und Strompfade, insbesondere die nicht benötigten Leitungen 155, 156, reduziert werden, welche bei transienten Vorgängen für die Übertragung der Nachrichten 45, 46 leitfähig gemacht werden können. Dadurch sind für die Einrichtung 12 besonders gute Übertragungseigenschaften erzielbar. Außerdem können beispielsweise besonders gut widersprüchliche Anforderungen für Konfigurationsstandards aufgelöst werden. Beispielsweise können die für die CAN-SIC-Funktionalität zusätzlich erforderlichen Schaltungsteile und deren parasitäre Kapazität entfernt werden, welche die Einhaltung der Anforderung an die maximale Anschluss-Kapazität der Busleitungen ausschließen, die für andere CAN-Varianten benötigt werden.

Jedoch ist bei der dritten Möglichkeit der Konfiguration eine Umschaltung zwischen Kommunikationsstandards während des Betriebs nicht mehr möglich.

Gemäß einer Modifikation der vorangehenden Beschreibung und/oder der Darstellung in Fig. 6 sind durch andere Konfiguration(en) beliebige andere Kombinationen, insbesondere Untermengen der Funktionalitäten der Bausteine 151, 152, wählbar. insbesondere ist es möglich, dass Funktionen vorhanden sind, welche die Kommunikation von Teilnehmerstationen 10, 20, 30, die gemäß unterschiedlichen Kommunikationsstandards in dem Bussystem 1 arbeiten, in einem Bussystem ermöglichen. Dadurch kann ein Teil der Teilnehmerstation 10, 30 zumindest zeitweise bereits Nachrichten 45 mit größerer Datenübertragungsrate austauschen als andere Teilnehmerstationen 20.

Gemäß noch einer anderen Modifikation der vorangehenden Beschreibung und/oder der Darstellung in Fig. 6 ist es möglich, die Bausteine 151, 152, insbesondere mindestens einen Teil der Funktionalitäten der Bausteine 151, 152, im Layout der Schaltung der Sende-/Empfangseinrichtung 12 ineinander zu verschachteln.

Gemäß noch einer anderen Modifikation der vorangehenden Beschreibung und/oder der Darstellung in Fig. 6 ist es möglich, dass zumindest ein Teil der Bausteine 151, 152, insbesondere mindestens ein Teil der Funktionalitäten der Bausteine 151, 152, als Software ausgeführt ist. Hierbei können beispielsweise bereits am Markt verfügbare standardisierte Hardwarebauteile für die Sende-/Empfangseinrichtung 12 und/oder mindestens einen der Bausteine 151, 152 softwaremäßig angepasst sein, um die in Bezug auf die vorangehenden Ausführungsbeispiele zuvor beschriebenen Funktionen der unterschiedlichen Kommunikationsstandards zu realisieren. Die softwaremäßige Anpassung ist deutlich weniger aufwändig und dadurch zeitsparender und kostengünstiger als die hardwaremäßige Umsetzung aller Funktionen der unterschiedlichen Kommunikationsstandards.

Somit ist das Kommunikationsmodul 15 verwendbar, um ein Verfahren zur Konfiguration der Sende-/Empfangseinrichtung 12 für unterschiedliche Kommunikationsstandards auszuführen. Außerdem ist das Kommunikationsmodul 15 verwendbar, um ein Verfahren zur Kommunikation in dem Bussystem auszuführen. Für die Kommunikation werden je nach Konfiguration der Bausteine 151, 152 keiner oder mindestens einer der Bausteine 151, 152 verwendet.

Gemäß einem zweiten Ausführungsbeispiel hat die Sende-/Empfangseinrichtung 12 von Fig. 6 nur einen der Bausteine 151, 152. Somit kann die Konfiguration der Sende-/Empfangseinrichtung 12 nur zwischen zwei Kommunikationsstandards geändert werden. Die Änderung des Kommunikationsstandards kann gemäß einer der Möglichkeiten erfolgen, wie in Bezug auf das vorangehende Ausführungsbeispiel beschrieben.

Gemäß einem dritten Ausführungsbeispiel hat die Sende-/Empfangseinrichtung 12 von Fig. 6 mehr als die beiden Bausteine 151, 152. Somit kann die Konfiguration der Sende-/Empfangseinrichtung 12 zwischen mehr als drei Kommunikationsstandards geändert werden. insbesondere bietet einer der Bausteine 151, 152 eine Untermenge von Funktionen gemäß dem Kommunikationsstandard CAN XL. Die Änderung des Kommunikationsstandards kann gemäß einer der Möglichkeiten erfolgen, wie in Bezug auf das erste Ausführungsbeispiel beschrieben.

Alle zuvor beschriebenen Ausgestaltungen der Sende-/Empfangseinrichtungen 12, 22, 32, der Teilnehmerstationen 10, 20, 30 des Bussystems 1 und des damit ausgeführten Verfahrens können einzeln oder in allen möglichen Kombinationen Verwendung finden, wie in den Ansprüchen beschrieben. Insbesondere können alle Merkmale der zuvor beschriebenen Ausführungsbeispiele und/oder deren Modifikationen und/oder Ausgestaltungen beliebig kombiniert werden, wie in den Ansprüchen beschrieben. Zusätzlich oder alternativ sind insbesondere folgende Modifikationen denkbar.

Insbesondere kann das Bussystem 1 gemäß den Ausführungsbeispielen ein Kommunikationsnetzwerk sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstationen 10 oder nur Teilnehmerstationen 20 oder nur Teilnehmerstationen 30 vorhanden sind.

## Patentansprüche

1. Sende-/Empfangseinrichtung (12; 32) für eine Teilnehmerstation (10; 30) eines seriellen Bussystems (1), mit
einem Sende-/Empfangsbaustein (120), der ein Sendemodul (121) und ein Empfangsmodul (122) aufweist und zur Kommunikation gemäß einem ersten Kommunikationsstandard ausgestaltet ist,
einem Kommunikationsmodul (15), das mindestens einen Baustein (151; 152) aufweist, mit welchem der erste Kommunikationsstandard des Sende-/Empfangsbausteins (120) zu einem zweiten Kommunikationsstandard änderbar ist, so dass die Sende-/Empfangseinrichtung (12) entweder gemäß dem ersten Kommunikationsstandard zum Senden und/oder Empfangen von Nachrichten (46) oder gemäß dem zweiten Kommunikationsstandard zum Senden und/oder Empfangen von Nachrichten (45) ausgestaltet ist,
einer ersten Anschlussleitung (153) zum Anschluss an einen Anschluss (43) für eine Versorgung des Sende-/Empfangsbausteins (120) und des Kommunikationsmoduls (15) mit elektrischer Spannung, und
einer zweiten Anschlussleitung (154) zum Anschluss des Kommunikationsmoduls (15) an Masse (44),
wobei das Kommunikationsmodul (15) zwischen den Sende-/Empfangsbaustein (120) und den Anschluss für Masse (44) geschaltet ist,
wobei das Sendemodul (121) zum Senden eines Sendesignals (TxD) auf einen Bus (40) des Bussystems (1) ausgestaltet ist, bei welchem Bussystem (1) zum Austausch von Nachrichten (45; 46) zwischen Teilnehmerstationen (10, 20, 30) des Bussystems (1) mindestens eine erste Kommunikationsphase (451) und eine zweite Kommunikationsphase (452) verwendet werden,
wobei das Empfangsmodul (122) zum Empfang des Signals (VDIFF) von dem Bus (40) ausgestaltet ist und ausgestaltet ist, aus dem von dem Bus (40) empfangenen Signal (VDIFF) ein digitales Empfangssignal (RxD) zu erzeugen, wobei das Kommunikationsmodul (15) mindestens einen Anschluss (158; 159) zum Empfang eines Signals (S_1; S_2) zum Aktivieren oder Deaktivieren des mindestens einen Bausteins (151; 152) aufweist,
wobei das Signal (S_1; S_2) den Kommunikationsstandard bestimmt, gemäß welchem die Nachrichten (45; 46) zwischen Teilnehmerstationen (10, 20, 30) des Bussystems (1) ausgetauscht werden, und
wobei der mindestens eine Baustein (151; 152) Komponenten enthält, welche in Kombination mit dem Sende-/Empfangsbaustein (120) die Sende-/Empfangseinrichtung (12) zur Kommunikation gemäß dem zweiten Kommunikationsstandard ausgestalten.

2. Sende-/Empfangseinrichtung (12; 32) nach Anspruch 1, wobei das Sendemodul (121) gemäß dem ersten Kommunikationsstandard ausgestaltet ist, eine Nachricht (46) in allen Kommunikationsphasen (451, 452) mit demselben Physical Layer auf den Bus (40) zu senden.

3. Sende-/Empfangseinrichtung (12; 32) nach einem der vorangehenden Ansprüche, wobei der mindestens eine Baustein (151; 152) ausgestaltet ist, das Sendemodul (121) gemäß dem zweiten Kommunikationsstandard derart auszugestalten, dass in einer Kommunikationsphase (452) zum Übertragen von Nutzdaten (455) der Nachricht (46; 45) die Bits mit einer Bitzeit auf den Bus (40) getrieben werden, die kleiner als eine Bitzeit (t_b1) von Bits ist, die das Sendemodul (121) gemäß dem ersten Kommunikationsstandard in der Kommunikationsphase (452) zum Übertragen von Nutzdaten (455) der Nachricht (46; 45) auf den Bus (40) treibt.

4. Sende-/Empfangseinrichtung (12; 32) nach einem der vorangehenden Ansprüche, wobei der mindestens eine Baustein (151; 152) ausgestaltet ist, das Sendemodul (121) gemäß einem dritten Kommunikationsstandard derart zu ändern, dass zumindest in einer ersten Kommunikationsphase (451) der Nachricht (45) ein anderer Physical Layer für das auf den Bus (40) zu sendende Signal verwendet wird als in einer zweiten Kommunikationsphase (452).

5. Sende-/Empfangseinrichtung (12; 32) nach einem der vorangehenden Ansprüche,
zudem mit ersten und zweiten Busanschlussleitungen (155, 156),
wobei der mindestens eine Baustein (151; 152) an seinem Ausgang mit den Busanschlussleitungen (155, 156) verbunden ist, so dass ein Signal für die Busadern (41, 42) von den Ausgängen des ersten Bausteins (151) über die Busanschlussleitungen (155, 156) auf den Bus (40) getrieben wird, wenn die Funktionen des mindestens einen Bausteins (151; 152) zur Kommunikation gemäß dem zweiten Kommunikationsstandard aktiviert sind.

6. Sende-/Empfangseinrichtung (12; 32) nach einem der vorangehenden Ansprüche, wobei das Kommunikationsmodul (15) ausgestaltet ist, den Kommunikationsstandard, für welchen die Sende-/Empfangseinrichtung (12) durch Aktivieren oder Deaktivieren der Funktionen des mindestens einen Bausteins (151; 152) ausgestaltet ist, im Betrieb der Sende-/Empfangseinrichtung (12) zu ändern.

7. Sende-/Empfangseinrichtung (12; 32) nach einem der vorangehenden Ansprüche, wobei das Kommunikationsmodul (15) ausgestaltet ist, den Kommunikationsstandard, für welchen die Sende-/Empfangseinrichtung (12) durch Aktivieren oder Deaktivieren der Funktionen des mindestens einen Bausteins (151; 152) ausgestaltet ist, durch Programmieren des mindestens einen Bausteins (151; 152) in der Serienprüftechnik zu ändern.

8. Sende-/Empfangseinrichtung (12; 32) nach einem der vorangehenden Ansprüche, wobei das Kommunikationsmodul (15) derart ausgestaltet ist, dass der Kommunikationsstandard, für welchen die Sende-/Empfangseinrichtung (12) durch Aktivieren oder Deaktivieren der Funktionen des mindestens einen Bausteins (151; 152) ausgestaltet ist, durch Maskenänderung bei der Einbindung des mindestens einen Bausteins (151; 152) in eine anwendungsspezifische integrierte Schaltung (16) änderbar ist.

9. Sende-/Empfangseinrichtung (12; 32) nach einem der vorangehenden Ansprüche, wobei bei jedem der Kommunikationsstandards in der ersten Kommunikationsphase (451) ausgehandelt wird, welche der Teilnehmerstationen (10, 20, 30) des Bussystems (1) in der nachfolgenden zweiten Kommunikationsphase (452) einen zumindest zeitweise exklusiven, kollisionsfreien Zugriff auf den Bus (40) bekommt.

10. Sende-/Empfangseinrichtung (12; 32) nach einem der vorangehenden Ansprüche, wobei der erste Kommunikationsstandard CAN FD ist, wobei der zweite Kommunikationsstandard CAN SIC ist, und wobei der dritte Kommunikationsstandard CAN XL ist.

11. Anwendungsspezifische integrierte Schaltung (16), in die eine Sende-/Empfangseinrichtung (12; 32) nach einem der vorangehenden Ansprüche integriert ist, wobei die Schaltung (16) für die Ausführung einer Anwendung einer technischen Anlage ausgestaltet ist.

12. Teilnehmerstation (10; 30) für ein serielles Bussystem (1), mit
einer Kommunikationssteuereinrichtung (11; 31) zum Steuern einer Kommunikation der Teilnehmerstation (10; 30) mit mindestens einer anderen Teilnehmerstation (10; 20; 30) des Bussystems (1) und zur Erzeugung eines Sendesignals (TxD) zum Senden auf den Bus (40) des Bussystems (1) und/oder zum Empfangen eines Signals (VDIFF) von dem Bus (40),
einer Sende-/Empfangseinrichtung (12; 32) nach einem der Ansprüche 1 bis 10 oder einer anwendungsspezifischen integrierten Schaltung (16) nach Anspruch 11,
wobei die Sende-/Empfangseinrichtung (12; 32) zum Umwandeln des Sendesignals (TxD) in mindestens ein analoges Signal (CAN_H; CAN_L) zum Senden auf den Bus (40) und zum Empfangen des mindestens einen analogen Signals (CAN_H; CAN_L; VDIFF) von dem Bus (40) ausgestaltet ist.

13. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Teilnehmerstation (10; 30) nach Anspruch 12 ist.

14. Verfahren zur Kommunikation in einem seriellen Bussystem (1), wobei das Verfahren mit einer Sende-/Empfangseinrichtung für eine Teilnehmerstation (10; 30) eines Bussystems (1) nach einem der Ansprüche 1 bis 10 ausgeführt wird, und wobei das Verfahren die Schritte aufweist,
Senden, mit dem Sendemodul (121), eines Sendesignals (TxD) auf einen Bus (40) des Bussystems (1), bei welchem Bussystem (1) zum Austausch von Nachrichten (45; 46) zwischen Teilnehmerstationen (10, 20, 30) des Bussystems (1) mindestens eine erste Kommunikationsphase (451) und eine zweite Kommunikationsphase (452) verwendet werden,
Empfangen, mit dem Empfangsmodul (122), des Signals (VDIFF) von dem Bus (40), wobei das Empfangsmodul (122) ausgestaltet ist, aus dem von dem Bus (40) empfangenen Signal (VDIFF) ein digitales Empfangssignal (RxD) zu erzeugen, und
Bestimmen, auf der Grundlage eines von dem Kommunikationsmodul (15) empfangenen Signals (S_1; S_2) zum Aktivieren oder Deaktivieren des mindestens einen Bausteins (151; 152), des ersten oder zweiten Kommunikationsstandards als den Kommunikationsstandard für das Kommunikationsmodul (15), gemäß welchem die Nachrichten (45; 46) zwischen Teilnehmerstationen (10, 20, 30) des Bussystems (1) mit dem Sende-/Empfangsbaustein (120) ausgetauscht werden.

## Claims

1. Transmission/reception device (12; 32) for a subscriber station (10; 30) of a serial bus system (1), having
a transmission/reception element (120) that has a transmission module (121) and a reception module (122) and is configured to communicate according to a first communication standard,
a communication module (15) having at least one element (151; 152) that can be used to change the first communication standard of the transmission/reception element (120) to a second communication standard, such that the transmission/reception device (12) is configured either according to the first communication standard for transmitting and/or receiving messages (46) or according to the second communication standard for transmitting and/or receiving messages (45),
a first connection line (153) for connection to a connection (43) for supplying the transmission/reception element (120) and the communication module (15) with electrical voltage, and
a second connection line (154) for connecting the communication module (15) to earth (44),
wherein the communication module (15) is connected between the transmission/reception element (120) and the connection for earth (44),
wherein the transmission module (121) is configured to transmit a transmission signal (TxD) onto a bus (40) of the bus system (1), in which bus system (1) at least a first communication phase (451) and a second communication phase (452) are used to exchange messages (45; 46) between subscriber stations (10, 20, 30) of the bus system (1),
wherein the reception module (122) is configured to receive the signal (VDIFF) from the bus (40) and is configured to generate a digital reception signal (RxD) from the signal (VDIFF) received from the bus (40), wherein the communication module (15) has at least one connection (158; 159) for receiving a signal (S_1; S_2) for activating or deactivating the at least one element (151; 152),
wherein the signal (S_1; S_2) determines the communication standard according to which the messages (45; 46) are exchanged between subscriber stations (10, 20, 30) of the bus system (1), and
wherein the at least one element (151; 152) contains components which, in combination with the transmission/reception element (120), configure the transmission/reception device (12) for communication according to the second communication standard.

2. Transmission/reception device (12; 32) according to Claim 1, wherein the transmission module (121) is configured according to the first communication standard to transmit a message (46) in all communication phases (451, 452) with the same physical layer onto the bus (40).

3. Transmission/reception device (12; 32) according to one of the preceding claims, wherein the at least one element (151; 152) is configured to configure the transmission module (121) according to the second communication standard such that, in a communication phase (452) for transmitting useful data (455) of the message (46; 45), the bits with a bit time that is less than a bit time (t_b1) of bits that are driven by the transmission module (121) onto the bus (40) according to the first communication standard in the communication phase (452) for transmitting useful data (455) of the message (46; 45) are driven onto the bus (40).

4. Transmission/reception device (12; 32) according to one of the preceding claims, wherein the at least one element (151; 152) is designed to change the transmission module (121) according to a third communication standard in such a way that, at least in a first communication phase (451) of the message (45), a different physical layer is used for the signal to be transmitted onto the bus (40) than in a second communication phase (452).

5. Transmission/reception device (12; 32) according to one of the preceding claims,
also having first and second bus connection lines (155, 156),
wherein the at least one element (151; 152) is connected at its output to the bus connection lines (155, 156) such that a signal for the bus wires (41, 42) is driven from the outputs of the first element (151), via the bus connection lines (155, 156), onto the bus (40) when the functions of the at least one element (151; 152) for communication according to the second communication standard are activated.

6. Transmission/reception device (12; 32) according to one of the preceding claims, wherein the communication module (15) is configured to change the communication standard, for which the transmission/reception device (12) is configured by activating or deactivating the functions of the at least one element (151; 152), during operation of the transmission/reception device (12).

7. Transmission/reception device (12; 32) according to one of the preceding claims, wherein the communication module (15) is configured to change the communication standard, for which the transmission/reception device (12) is configured by activating or deactivating the functions of the at least one element (151; 152), by programming the at least one element (151; 152) using series test technology.

8. Transmission/reception device (12; 32) according to one of the preceding claims, wherein the communication module (15) is configured such that the communication standard, for which the transmission/reception device (12) is configured by activating or deactivating the functions of the at least one element (151; 152), can be changed by changing the mask when integrating the at least one element (151; 152) in an application-specific integrated circuit (16).

9. Transmission/reception device (12; 32) according to one of the preceding claims, wherein it is negotiated, for each of the communication standards in the first communication phase (451), which of the subscriber stations (10, 20, 30) of the bus system (1) receives at least temporarily exclusive, collision-free access to the bus (40) in the subsequent, second communication phase (452).

10. Transmission/reception device (12; 32) according to one of the preceding claims, wherein the first communication standard is CAN FD, wherein the second communication standard is CAN SIC, and wherein the third communication standard is CAN XL.

11. Application-specific integrated circuit (16), in which a transmission/reception device (12; 32) according to one of the preceding claims is integrated, wherein the circuit (16) is configured to execute an application of a technical installation.

12. Subscriber station (10; 30) for a serial bus system (1), having
a communication control device (11; 31) for controlling communication between the subscriber station (10; 30) and at least one other subscriber station (10; 20; 30) of the bus system (1) and for generating a transmission signal (TxD) for transmission onto the bus (40) of the bus system (1) and/or for receiving a signal (VDIFF) from the bus (40),
a transmission/reception device (12; 32) according to one of Claims 1 to 10 or an application-specific integrated circuit (16) according to Claim 11,
wherein the transmission/reception device (12; 32) is configured to convert the transmission signal (TxD) into at least one analogue signal (CAN_H; CAN_L) for transmission onto the bus (40) and to receive the at least one analogue signal (CAN_H; CAN_L; VDIFF) from the bus (40).

13. Bus system (1) having
a bus (40), and
at least two subscriber stations (10; 20; 30) connected to one another via the bus (40) in such a manner that they can communicate serially with one another and at least one subscriber station (10; 30) of which is a subscriber station (10; 30) according to Claim 12.

14. Method for communication in a serial bus system (1), wherein the method is carried out with a transmission/reception device for a subscriber station (10; 30) of a bus system (1) according to one of Claims 1 to 10, and wherein the method has the steps of
using the transmission module (121) to transmit a transmission signal (TxD) onto a bus (40) of the bus system (1), in which bus system (1) at least a first communication phase (451) and a second communication phase (452) are used to exchange messages (45; 46) between subscriber stations (10, 20, 30) of the bus system (1),
using the reception module (122) to receive the signal (VDIFF) from the bus (40), wherein the reception module (122) is configured to generate a digital reception signal (RxD) from the signal (VDIFF) received from the bus (40), and
determining, on the basis of a signal (S_1; S_2) received from the communication module (15) for activating or deactivating the at least one element (151; 152), the first or second communication standard as the communication standard for the communication module (15), according to which the messages (45; 46) are exchanged between subscriber stations (10, 20, 30) of the bus system (1) using the transmission/reception element (120).

## Revendications

1. Dispositif d'émission/réception (12 ; 32) pour une station d'abonné (10 ; 30) d'un système de bus série (1), comprenant
un composant d'émission/réception (120) qui présente un module d'émission (121) et un module de réception (122) et est configuré pour communiquer selon une première norme de communication,
un module de communication (15) qui présente au moins un composant (151 ; 152) qui permet de modifier la première norme de communication du composant d'émission/réception (120) en une deuxième norme de communication de sorte que le dispositif d'émission/réception (12) est configuré soit selon la première norme de communication pour émettre et/ou recevoir des messages (46), soit selon la deuxième norme de communication pour émettre et/ou recevoir des messages (45),
une première ligne de connexion (153) pour la connexion à une borne (43) pour une alimentation en tension électrique du composant d'émission/réception (120) du module de communication (15), et
une deuxième ligne de connexion (154) pour connecter le module de communication (15) à la masse (44),
dans lequel le module de communication (15) est connecté entre le composant d'émission/réception (120) et la borne de masse (44),
dans lequel le module d'émission (121) est configuré pour émettre un signal d'émission (TxD) sur un bus (40) du système de bus (1), dans lequel système de bus (1), au moins une première phase de communication (451) et une deuxième phase de communication (452) sont utilisées pour échanger des messages (45 ; 46) entre des stations d'abonné (10, 20, 30) du système de bus (1),
dans lequel le module de réception (122) est configuré pour recevoir le signal (VDIFF) du bus (40), et est configuré pour produire un signal de réception numérique (RxD) à partir du signal (VDIFF) reçu du bus (40), dans lequel le module de communication (15) présente au moins une borne (158 ; 159) pour recevoir un signal (S_1 ; S_2) pour activer ou désactiver ledit au moins un composant (151 ; 152),
dans lequel le signal (S_1 ; S_2) détermine la norme de communication selon laquelle les messages (45 ; 46) sont échangés entre les stations d'abonné (10, 20, 30) du système de bus (1), et
dans lequel ledit au moins un composant (151 ; 152) comprend des éléments qui configurent en combinaison avec le composant d'émission/réception (120) le dispositif d'émission/réception (12) pour communiquer selon la deuxième norme de communication.

2. Dispositif d'émission/réception (12 ; 32) selon la revendication 1, dans lequel le module d'émission (121) est configuré selon la première norme de communication pour émettre un message (46) dans toutes les phases de communication (451, 452) avec la même couche physique sur le bus (40).

3. Dispositif d'émission/réception (12 ; 32) selon l'une quelconque des revendications précédentes, dans lequel ledit au moins un composant (151 ; 152) est configuré pour configurer le module d'émission (121) selon la deuxième norme de communication de telle sorte que dans une phase de communication (452) pour transmettre des données utiles (455) du message (46 ; 45), les bits sont appliqués au bus (40) avec un temps de bit qui est inférieur à un temps de bit (t_b1) des bits que le module d'émission (121) selon la première norme de communication applique au bus (40) dans la phase de communication (452) pour transmettre des données utiles (455) du message (46 ; 45).

4. Dispositif d'émission/réception (12 ; 32) selon l'une quelconque des revendications précédentes, dans lequel ledit au moins un composant (151 ; 152) est configuré pour modifier le module d'émission (121) selon une troisième norme de communication de telle sorte qu'au moins dans une première phase de communication (451) du message (45), une autre couche physique est utilisée pour le signal à émettre sur le bus (40) que dans une deuxième phase de communication (452).

5. Dispositif d'émission/réception (12 ; 32) selon l'une quelconque des revendications précédentes,
comprenant en outre une première et une deuxième ligne de connexion de bus (155, 156),
dans lequel ledit au moins un composant (151 ; 152) est relié à sa sortie aux lignes de connexion de bus (155, 156) de sorte qu'un signal pour les fils de bus (41, 42) est appliqué au bus (40) à partir des sorties du premier composant (151) par les lignes de connexion de bus (155, 156) lorsque les fonctions dudit au moins un composant (151, 152) pour la communication selon la deuxième norme de communication sont activées.

6. Dispositif d'émission/réception (12 ; 32) selon l'une quelconque des revendications précédentes, dans lequel le module de communication (15) est configuré pour modifier en cours de fonctionnement du dispositif d'émission/réception (12) la norme de communication pour laquelle le dispositif d'émission/réception (12) est configuré par l'activation ou la désactivation des fonctions dudit au moins un composant (151 ; 152).

7. Dispositif d'émission/réception (12 ; 32) selon l'une quelconque des revendications précédentes, dans lequel le module de communication (15) est configuré pour modifier par programmation dudit au moins un composant (151 ; 152) dans la technique de contrôle en série la norme de communication pour laquelle le dispositif d'émission/réception (12) est configuré par l'activation ou la désactivation des fonctions dudit au moins un composant (151 ; 152).

8. Dispositif d'émission/réception (12 ; 32) selon l'une quelconque des revendications précédentes, dans lequel le module de communication (15) est configuré de telle sorte que la norme de communication pour laquelle le dispositif d'émission/réception (12) est configuré par l'activation ou la désactivation des fonctions dudit au moins un composant (151 ; 152) peut être modifiée par une modification de masque lors de l'incorporation dudit au moins un composant (151 ; 152) dans un circuit intégré spécifique à une application (16).

9. Dispositif d'émission/réception (12 ; 32) selon l'une quelconque des revendications précédentes, dans lequel dans chacune des normes de communication, il est négocié dans la première phase de communication (451) laquelle des stations d'abonné (10, 20, 30) du système de bus (1) obtiendra dans la deuxième phase de communication (452) consécutive un accès au bus (40) au moins temporairement exclusif et sans collision.

10. Dispositif d'émission/réception (12 ; 32) selon l'une quelconque des revendications précédentes, la première norme de communication étant CAN FD, la deuxième norme de communication étant CAN SIC, et la troisième norme de communication étant CAN XL.

11. Circuit intégré spécifique à une application (16) dans lequel est intégré un dispositif d'émission/réception (12 ; 32) selon l'une quelconque des revendications précédentes, le circuit (16) étant configuré pour exécuter une application d'une installation technique.

12. Station d'abonné (10 ; 30) pour un système de bus série (1), comprenant
un dispositif de commande de communication (11 ; 31) pour commander une communication de la station d'abonné (10 ; 30) avec au moins une autre station d'abonné (10 ; 20 ; 30) du système de bus (1), et pour produire un signal d'émission (TxD) à émettre sur le bus (40) du système de bus (1) et/ou pour recevoir un signal (VDIFF) du bus (40),
un dispositif d'émission/réception (12 ; 32) selon l'une quelconque des revendications 1 à 10 ou un circuit intégré spécifique à une application (16) selon la revendication 11,
dans laquelle le dispositif d'émission/réception (12 ; 32) est configuré pour convertir le signal d'émission (TxD) en au moins un signal analogique (CAN_H ; CAN_L) à émettre sur le bus (40) et pour recevoir ledit au moins un signal analogique (CAN_H ; CAN_L ; VDIFF) du bus (40).

13. Système de bus (1), comprenant
un bus (40), et
au moins deux stations d'abonné (10 ; 20 ; 30) qui sont reliées l'une à l'autre par le biais du bus (40) de telle sorte qu'elles peuvent communiquer en série entre elles, et parmi lesquelles au moins une station d'abonné (10 ; 30) est une station d'abonné (10 ; 30) selon la revendication 12.

14. Procédé de communication dans un système de bus série (1), dans lequel le procédé est exécuté par un dispositif d'émission/réception pour une station d'abonné (10 ; 30) d'un système de bus (1) selon l'une quelconque des revendications 1 à 10, et dans lequel le procédé présente les étapes consistant à
émettre par le module d'émission (121) un signal d'émission (TxD) sur un bus (40) du système de bus (1), dans lequel système de bus (1), pour l'échange de messages (45 ; 46) entre des stations d'abonné (10, 20, 30) du système de bus (1), au moins une première phase de communication (451) et une deuxième phase de communication (452) sont utilisées,
recevoir par le module de réception (122) le signal (VDIFF) du bus (40), le module de réception (122) étant configuré pour produire un signal de réception numérique (RxD) à partir du signal (VDIFF) reçu du bus (40), et
déterminer sur la base d'un signal (S_1 ; S_2) reçu du module de communication (15), pour l'activation ou la désactivation dudit au moins un composant (151 ; 152), la première ou la deuxième norme de communication comme la norme de communication pour le module de communication (15) selon laquelle les messages (45 ; 46) sont échangés entre les stations d'abonné (10, 20, 30) du système de bus (1) avec le composant d'émission/réception (120).
